# EUROPÄISCHE PATENTSCHRIFT

(11) **EP 3 541 181 B1**
(45) Veröffentlichungstag und Bekanntmachung des Hinweises auf die Patenterteilung: **26.07.2023**
(21) Anmeldenummer: 17794952.6
(22) Anmeldetag: 08.11.2017
(51) Int. Cl.: A01M 29/08

(54) **TRANSPARENTE SCHEIBE**
TRANSPARENT PANE
VITRE TRANSPARENTE

(30) Priorität: 16.11.2016 DE 102016122030
(43) Veröffentlichungstag der Anmeldung: 25.09.2019
(73) Patentinhaber: Glaswerke Arnold GmbH & Co. KG, 73630 Remshalden (DE)
(72) Erfinder: ARNOLD, Hans-Joachim, 73630 Remshalden (DE); DEHNER, Hermann, 91555 Feuchtwangen (DE)
(74) Vertreter: Manitz Finsterwald Patent- und Rechtsanwaltspartnerschaft mbB
(86) Internationale Anmeldenummer: PCT/EP2017/078530
(87) Internationale Veröffentlichungsnummer: WO 2018/091320

(56) Entgegenhaltungen:
- WO-A1-2015/183681
- WO-A1-2015/183681
- DE-A1- 10 346 505
- DE-A1- 10 346 505
- JP-A- H07 289 142
- JP-A- H07 289 142
- US-A1- 2012 113 519
- US-A1- 2012 113 519
- US-A1- 2014 168 760
- US-A1- 2014 168 760

## Beschreibung

Die Erfindung betrifft transparente Scheiben, insbesondere Glasscheiben, die im Hochbau eingesetzt werden können, beispielsweise als Fensterglas oder allgemein zum Verschließen von Gebäudeöffnungen, aber auch als Schallschutzwände bspw. im Straßenbau oder ähnliches.

Bekanntermaßen sind solche Glasflächen dem Vogelschlag ausgesetzt. Gewöhnliche Glasscheiben werden von Vögeln nicht oder kaum bzw. zu spät erkannt, sodass Vögel immer wieder und dann häufig mit hoher Geschwindigkeit gegen Glasscheiben fliegen, was zum Vogeltod und manchmal auch zu zerbrochenen Glasscheiben führen kann.

Zur Vermeidung oder wenigstens Verringerung des Vogelschlags sind verschiedene Techniken bekannt. Immer wieder sieht man Scheiben, die mit Raubvogelsilhouetten beklebt sind, die einerseits ein Hindernis symbolisieren und andererseits auch Gefahr signalisieren sollen. Solche Silhouetten sind aber von relativ geringer Wirkung und stellen außerdem einen Eingriff in ein gegebenenfalls entwickeltes ästhetisches Konzept des Bauwerks dar.

Die EP 1479294 offenbart, Glasscheiben mit einer Bemusterung mit feinen Mustern zu versehen, wie in Figur 1a gezeigt. Die Muster sind so fein, dass sie vom Menschen nicht oder kaum wahrgenommen werden. Vögel haben aber ein höheres Auflösungsvermögen als Menschen, sodass Vögel sie noch sehen können. Auf diese Weise können Glasscheiben als Hindernis erkennbar gemacht werden, ohne dass es zu einem Eingriff in das gegebenenfalls geplante ästhetische Konzept des Gebäudes kommt.

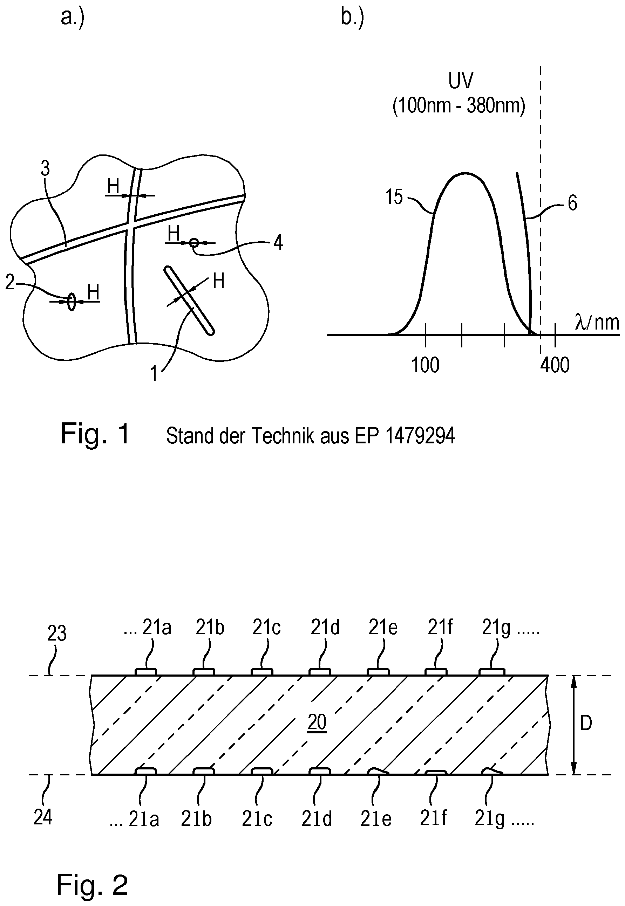

Die EP 1479294 offenbart auch die Bemusterung von Glasscheiben mit UV-wirksamen Materialien, also UV-Licht absorbierenden und/ oder reflektierenden Materialien, wie in Figur 1b gezeigt. Dies nützt die Tatsache, dass viele Vogelarten in den UV-Bereich hinein Licht erkennen können, das für Menschen nicht mehr sichtbar ist. Derart behandelte Glasscheiben erscheinen für viele Vogelarten dann anders als durchsichtig und sind damit als Hindernis erkennbar.

Die DE 10346505 A1 beschreibt eine lichtdurchlässige Scheibe, bei der mindestens zwei Oberflächen mit sichtbaren Strukturen versehen sind.

Die JP H07 289142 beschreibt vogelschlaggeschütztes Glas. Es weist eine bedruckte Oberfläche auf.

Die US 2014/0168760 A1 beschreibt ein Fenster mit verringertem Vogelschlag. Dessen Scheibe weist ein UV-wirksames Beschichtungsmuster auf.

Die WO 2015/183681 A1 beschreibt eine Fenstereinheit zur Verhinderung von Vogelschlag. Es weist ein UV-wirksames Reflexionsmuster auf.

Die US 2012/0113519 A1 beschreibt transparente Scheiben zur Verhinderung von Vogelschlag. Eine Oberfläche trägt ein UV-wirksames Muster.

Nachteil der bisherigen Techniken ist, dass sie oft einen Kompromiss zwischen Wirksamkeit und Scheibentransparenz darstellen oder nicht für alle Vogelarten hinreichend wirksam sind.

Aufgabe der Erfindung ist es, eine transparente Scheibe anzugeben, die einen verbesserten Vogelschlagschutz aufweist.

Diese Aufgabe wird mit den Merkmalen der unabhängigen Patentansprüche gelöst. Abhängige Patentansprüche sind auf bevorzugte Ausführungsformen der Erfindung gerichtet.

Eine transparente Scheibe hat ein erstes optisch wirksames Muster in einer ersten Ebene und ein zweites optisch wirksames Muster in einer zweiten Ebene, die in Dickenrichtung der Scheibe beabstandet von der ersten Ebene ist.

Anders ausgedrückt, kann die transparente Scheibe ein optisch wirksames Muster mit einzelnen Musterelementen haben, wobei einzelne Musterelemente in Dickenrichtung der Scheibe voneinander beabstandet sind.

Durch die Beabstandung einzelner Musterelemente in Dickenrichtung der Scheibe ergeben sich relative Verschiebungen der Musterelemente zueinander, die im Anflug scheinbar dynamische Effekte hervorrufen
können (Kulissenwirkung, Moiré-Effekt). Auf diese Weise ergibt sich über die Musterwirkung der einzelnen Muster hinaus ein Zusammenwirken der Muster derart, dass makroskopische Muster vorliegen bzw. entstehen oder wieder verschwinden, was markant von der Bewegung eines Vogels relativ zur Scheibe abhängig sein kann. Dadurch werden die zusammenwirkenden Muster in ihrer Wirksamkeit höher sein als die Summe der Einzelwirkungen, sodass die Vogelschlagschutzwirkung verbessert ist.

Es können insbesondere in zwei oder mehr Ebenen der Scheibe zwei oder mehr optisch wirksame Muster vorliegen, die aufeinander abgestimmt gestaltet sein können. Die Abstimmung kann so sein, dass in gewünschter Weise Kulissenwirkungen entstehen und/oder vermieden werden bzw. Moiré-Effekte hervorgerufen werden. Die genannten Ebenen können die zwei Oberflächen einer Scheibe sein. Denkbar ist aber auch, einzelne Musterelemente im Inneren einer dicken Scheibe anzulegen.

Für die statische Anlage der optisch wirksamen Muster kann die erweiterte Wellenlängensichtigkeit der Vögel genutzt werden und/oder das bessere Auflösungsvermögen. Darüber hinaus zeigte sich, dass Vögel ein gutes Wahrnehmungsvermögen für dynamische Vorgänge haben (differentielles Sehen). Auch diese Eigenschaft kann genützt werden.

Nachfolgend werden bezugnehmend auf die Zeichnungen einzelne Ausführungsformen der Erfindung beschrieben. Es zeigen
Figur 1a und 1b bekannte Ausführungsformen,
Figur 2 eine erste Ausführungsform,
Figur 3 eine Darstellung zur Erläuterung von Kulisssenwirkungen bzw. Moiré-Effekten,
Figur 4a, 4b und 4c unterschiedliche Moiré-Muster,
Figur 5 eine zweite Ausführungsform, und
Figur 6 eine dritte Ausführungsform.

Fig. 2 zeigt eine Scheibe 20. Es kann eine transparente Scheibe beispielsweise aus Glas, Quarzglas, Kunststoff oder ähnlichem sein. Die Scheibe hat zwei Oberflächen, die in der Fig. 2 oben bzw. unten liegen, und einen in der Zeichnung als konstant angenommenen Abstand D haben. Der Abstand D kann, muss aber nicht konstant sein. Durch die gestrichelten Linien 23 und 24 sind zwei Ebenen angedeutet, die in der Ausführungsform der Fig. 2 auf den zwei Scheibenoberflächen liegen. Jede der Oberflächen entsprechend jeder der Ebenen 23, 24 trägt ein optisch wirksames Muster 21, 22, das aus jeweils einzelnen Musterelementen 21a, 21b, 21c, 21d, ... und 22a, 22b, 22c, 22d, ... bestehen kann. Die Musterelemente können voneinander getrennt als Muster einzelner Punkte vorliegen und/oder aus zusammenhängenden linienartigen Musterelementen bestehen. Die Linien können offene oder geschlossene Linienzüge (Kreise, Ellipsen, Vielecke, unregelmäßig geschlossene Formen) sein. Die Linien können gerade, winkelig/eckig oder kurvig sein.

Fig. 2 zeigt eine Ausführungsform, bei der das Muster 21 durch Auftrag eines bestimmten Materials entsprechend gewünschten Musterelementen auf die Scheibenoberfläche entsprechend Ebene 23 erzeugt wurde. Es kann Titanoxid (Z. B. TiO₂ und/oder Zinnoxid (z. B. SnO₂) aufweisen. Die Schichtdicke kann so gewählt werden, dass an bestimmten Lichtwellenlängen oder Bereichen (UV-Bereich) ein gewünschtes Maß an Reflexion und/oder Absorption und/oder Streuung erzeugt wird. Muster 22 zeigt eine Ausführungsform, bei der die Musterelemente durch Abtrag aus der Ebene oder durch Bearbeiten von Materialstellen in der Ebene 24 erzeugt wurden. Auf diese Weise können die einzelnen Muster erzeugt werden, wobei auch Mischformen der Erzeugung möglich sind. Die einzelnen Musterelemente können scharf gegen die Umgebung (andere Musterelemente) abgegrenzt sein oder verlaufende Übergänge dazu haben.

Ohne Bezugnahme auf zwei Ebenen 23 und 24 können die einzelnen Musterelemente 21a, 21b, ..., 22a, 22b, ... auch als Musterelemente eines optisch wirksamen Gesamtmusters, die einen bestimmten Abstand D voneinander in Scheibenrichtung aufweisen, beschrieben werden.

Anders als in Fig. 2 gezeigt können Musterelemente 21a, 21b, ..., 22a, 22b, ... auch im Inneren des Scheibenvolumens liegen und dort durch geeignete Bearbeitungsschritte erzeugt werden, etwa durch Laserfokussierung und ähnliches. Sie können z. B. eine verstärkte Lichtstreuung bewirken

Ein Muster kann eine Anordnung von Musterelementen mit unterschiedlichen optischen Eigenschaften sein. Die optischen Eigenschaften können Transmission und/oder Absorption und/oder Reflexion und/oder Streuung und/oder Beeinflussung der Polarisation sein. Vorzugsweise sind dabei jeweils mehrere Musterelemente vorgesehen, die jeweils eine von mindestens zwei unterschiedlichen Qualitäten aufweisen.

Die eine, erste Qualität kann dabei diejenige des mehr oder minder unbehandelten transparenten Scheibenmaterials sein, während die zweite Qualität eine deutliche Abänderung sein kann.

Die Abänderung kann durch Materialveränderung und/oder durch Beschichtung, Bedampfung, Beklebung, Implantation, Oberflächenbearbeitung, chemische Bearbeitung oder ähnliches erfolgen. Es können aber auch beide Qualitäten wie genannt abgeändert gegenüber dem transparenten Scheibenmaterial sein, wobei dann die Abänderungen der beiden Qualitäten zueinander qualitativ und/oder quantitativ unterschiedlich sind.

Musterelemente der ersten Qualität können im für Menschen sichtbaren Bereich des Spektrums (Untergrenze 380 nm oder 400 nm Wellenlänge, Obergrenze 800 nm oder 780 nm Wellenlänge) der Scheibenbereich wie regulär transparentes (durchsichtiges) Material, insbes. Glas erscheinen, insbesondere also in diesem Wellenlängenbereich Strahlungsleistung zu höchstens 20% oder höchstens 10% absorbieren und nur geringfügig (< 10 % oder < 5% oder kleiner 2%) reflektieren und streuen. Auch jenseits des sichtbaren Bereichs (UV, IR) kann dies so sein. Es kann sich hier um reguläre, unbehandelte und unbeschichtete Scheibenbereiche handeln.

Die zweite Qualität unterscheidet sich von der ersten in Absorption und/oder Reflexion und/oder Transmission und/oder Streuung und/oder Polarisationsbeeinflussung. Insbesondere kann die zweite Qualität eine stärkere Beeinflussung, insbesondere Absorption und/oder Reflexion und/oder Streuung einer bestimmten Wellenlänge oder eines bestimmten Wellenlängenbereichs umfassen. Die Absorption und/oder Reflexion und/oder Streuung können jeweils für sich oder kombiniert über 20% oder über 50% oder über 70% der Strahlungsleistung einer bestimmten Wellenlänge bzw. eines Wellenlängenbereichs beeinflussen, also absorbieren und/oder streuen und/oder reflektieren.

Der beeinflusste Wellenlängenbereich oder die beeinflusste Wellenlänge kann im für Menschen sichtbaren Bereich liegen und hiervon Teile oder mehr oder minder den gesamten Bereich beeinflussen. Der beeinflusste Wellenlängenbereich oder die beeinflusste Wellenlänge kann auch im angrenzenden ultravioletten Bereich, insbesondere mit Untergrenze 50 nm oder 100 nm oder 300 nm und Obergrenze 400 nm oder 380 nm, liegen. Insbesondere die Absorption und/oder die Reflexion und/oder Streuung kann hier stärker als bei der ersten Qualität sein.

Die unterschiedlichen Scheibenbereiche der ersten und der zweiten Qualität können scharf gegeneinander abgegrenzt sein oder verlaufende Übergänge aufweisen.

Die Scheibenbereiche der zweiten Qualität nehmen vorzugsweise weniger als 60% oder weniger als 55% der Scheibenfläche ein und/oder wenigstens 10% oder wenigstens 20% oder wenigstens 45% der Scheibenfläche.

Jedes der Muster kann in einer Dimension oder in beiden Flächendimensionen zumindest bereichsweise regelmäßig periodisch angelegt sein. Es kann aber auch zufällig oder pseudo-zufällig gestaltet sein. Wenn ein Muster (z. B. Muster 21) pseudo-zufällig (nur scheinbar zufällig, tatsächlich deterministisch) gestaltet ist, kann das andere Muster (dann 22) abgestimmt pseudo-zufällig gestaltet sein.

Die Musterelemente der zweiten Qualität (insbesondere also mit bereichsweise höherer Absorption und/oder Reflexion, Streuung) können inselartig voneinander isoliert sein und als getrennte Bereiche in mehr oder minder zusammenhängenden Scheibenbereichen der ersten Qualität liegen. Die Verhältnisse können aber auch umgekehrt sein.

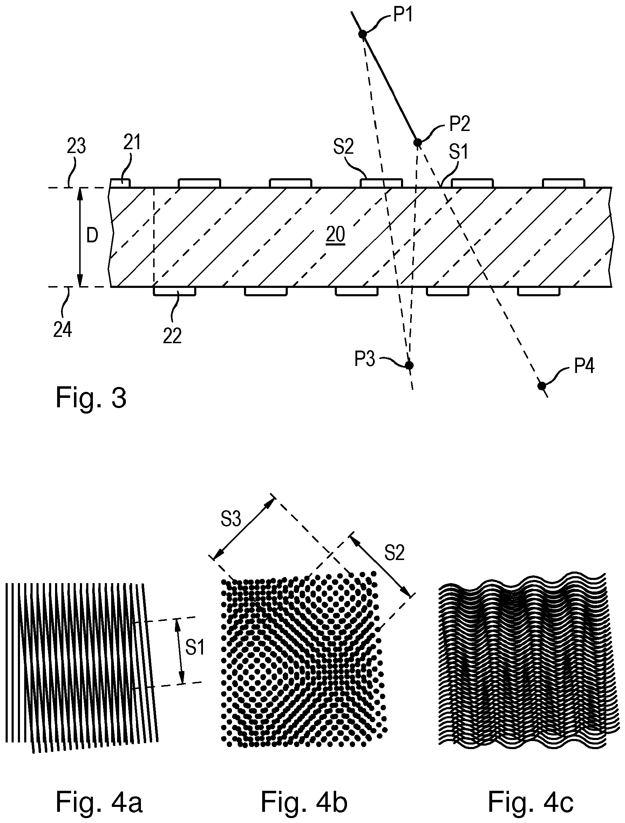

Bezugnehmend auf Fig. 3 werden Wirkungsweisen der beschriebenen Muster erläutert. Es wird angenommen, dass ein Vogel von der Position P1 zur Position P2 fliegt. Betrachtet werden dabei Positionen P3 und P4 im Raum hinter der Scheibe, wobei P3 in Flugrichtung schräg voraus und P4 in Flugrichtung genau voraus liegt.

In der Fig. 3 ist die Situation so angenommen, dass die in Flugrichtung voraus liegende Stellen S1 auf der näheren Ebene 23 und die entsprechende Stelle auf der anderen Ebene kein abdeckendes Musterelement aufweisen, sodass insgesamt von den Positionen P1 und P2 aus die Scheibenstelle S 1 insgesamt durchsichtig erscheint und das Raumvolumen P4 dahinter sichtbar ist und bleibt.

Anders ist dies für die Scheibenstelle S2 angenommen. Von der Position P1 aus liegt in der näheren Ebene 23 ein abdeckendes Muster vor, sodass die Stelle S2 undurchsichtig erscheint und das Raumvolumen P3 dahinter nicht sichtbar ist.. Anders ist die Situation von der Position P2 aus. Beide Ebenen 23 und 24 sind durchsichtig im herkömmlichen Sinne des Wortes (gering absorbierend, höher transparent), so dass die Scheibenstelle S2 insgesamt durchsichtig und das Volumen P3 dahinter sichtbar werden. Auf diese Weise ändert sich die Durchsichtigkeit der Scheibenstelle S2 bei der Bewegung vom Punkt P1 zum Punkt P2. Dies kann als Kulissenwirkung verstanden werden. Bei größeren Mustern ergibt sich insgesamt ein Moiré-Effekt, also ein Großmuster, das durch Überlagerung mindestens zweier Kleinmuster (Muster 21 und 22) entsteht.

Die Beschreibung eben stellte auf intensitätsabsorbierende Muster ab. Stattdessen oder zusätzlich kann das Muster auch streuend und/oder reflektierend sein. Statt undurchsichtiger Bereiche können dann dunklere oder unschärfere oder spiegelnde Bereiche auftreten.

Fig. 4 zeigt Beispiele von Moire-Mustern. Fig. 4a zeigt ein Muster, das in einer Dimension (vertikal in Fig. 4a) eine Periodizität der Schrittweite S1 aufweist. Die dunklen Balken sind die zusammengesetzt erscheinenden Kreuzungspunkte der Linien der einzelnen Linienmuster 21, 22, wobei hier das eine Muster gegen das andere Muster leicht verdreht in der Weise ist, dass die Linien nicht parallel zueinander sind. Die Periodizität des Moiré-Musters wird nachfolgend als Gitterkonstante bezeichnet. Sie hängt vom Abstand der Linien und vom Verdrehwinkel der beiden Linienmuster 21, 22 gegeneinander ab. Mittels dieser Parameter kann die Gitterkonstante bestimmt und eingestellt werden.

Fig. 4b zeigt ein zweidimensional periodisches Moiré-Muster, das durch Überlagerung zweier Punktmuster 21, 22 entsteht. Sie können beispielsweise konstante Punktmuster sein, wobei sie zwar in den einzelnen Ebenen konstante, aber im Vergleich der Ebenen untereinander unterschiedliche Schrittweiten aufweisen können. Hier können entsprechend den zwei Flächendimensionen zwei Gitterkonstanten S2 und S3 definiert werden, beispielsweise eine von links unten nach rechts oben und eine von rechts unten nach links oben betrachtet.

Fig. 4c zeigt schließlich ein unregelmäßiges Moiré-Muster, das durch Überlagerung von in gewisser Weise unregelmäßig gestalteten Einzelmustern entstehen kann.

Soweit Moiré-Effekte hervorgerufen werden sollen, kann eines der optisch wirksamen Muster, beispielsweise das zweite, abgestimmt auf das erste optisch wirksame Muster angelegt und positioniert sein.

Bei regelmäßig angelegten Mustern lassen sich oft eine oder mehrere Achsen definieren, etwa Hauptachsen von gedachten Gittern, auf deren Kreuzungspunkten Musterelemente angeordnet sind. Bezugnehmend auf diese Achsen können dann auch Musterausrichtungen definiert sein. Wenn erstes und zweites optisch wirksames Muster jeweils derartige Achsen aufweisen, können diese Achsen parallel zueinander oder verdreht gegeneinander um einen bestimmten Winkel sein, wobei der Winkel größer 1° oder größer 2° oder größer 5° oder größer 10° und/oder kleiner 20° oder kleiner 10° oder kleiner 5° oder kleiner 4° sein kann.

Die Gitterkonstanten der für Moiré-Effekte genützten beabstandeten Muster können gleich sein oder voneinander abweichen, etwa in einer Dimension oder ggf. in zwei Dimensionen um mindestens0,5% oder mindestens 1 % oder mindestens 2% oder mindestens 5% und/oder höchstens 20% oder höchstens 10% oder höchstens 5% oder höchstens 2%.

Die Gestaltung der optisch wirksamen Muster in den zwei Ebenen 23 und 24 kann so sein, dass in einem bestimmten Abstand von der Scheibe ein bestimmtes Moiré-Muster entsteht. Die Parameter der jeweiligen Einzelmuster 21, 22 können nach Maßgabe des gewünschten Moiré-Musters gewählt werden.

Es kann wünschenswert sein, dass in einem Abstand von der Scheibe, bei dem der Vogel im Anflug noch reagieren kann, gut wahrnehmbare Moiré-Muster entstehen. Der genannte Abstand kann 2 m oder 4 m oder 6 m senkrecht entfernt von der Scheibe sein. Das durch die Gestaltung der beiden Muster mittelbar entworfene Moiré-Muster kann dann so sein, dass es in diesem Abstand regelmäßig ist und eine eindimensionale oder zweidimensionale Periodizität S1, S2, S3 transparenter und intransparenter (bzw. weniger transparenter) Scheibenbereiche aufweist. Die Periodizität (Gitterkonstante) des Moiré-Musters kann dann in einer oder in beiden Dimensionen der Scheibenfläche über 2 cm oder über 5 cm liegen und/oder unter 30 cm oder unter 20 cm.

Die Muster können auch so gestaltet sein, dass das entstehende Moiré-Muster aperiodisch bzw. unregelmäßig bzw. quasi-zufällig erscheint. Dann können die einzelnen Bereiche durchlässiger und undurchlässiger bzw. weniger durchlässiger Scheibenbereiche durchschnittliche Mittenabstände über 2 cm oder über 5 cm oder unter 20 cm oder unter 15 cm aufweisen.

Die auf den jeweiligen Scheiben bzw. Ebenen angebrachten Muster können auch so gestaltet sein, dass sich bereichsweise regelmäßige und bereichsweise unregelmäßige Moiré-Muster ergeben.

Die Gestaltung der einzelnen optisch wirksamen Muster kann auch so sein, dass bestimmte dynamisch erscheinende Effekte eintreten, indem sich bei Änderung der Betrachtungsposition die Moiré-Muster ändern. Beispielsweise kann die Gestaltung so sein, dass bei Annäherung die Gitterkonstante des Moiré-Musters kleiner wird, jedoch noch wahrnehmbar bleibt.

Da, wie in Fig. 3 gezeigt, die beiden Muster 21, 22 einen Abstand entsprechend dem Abstand D der beiden Musterebenen 23 und 24 zueinander haben, ist die Überlagerungswirkung der beiden Muster auch positions- bzw. blickwinkelabhängig und wird dadurch auch bewegungsabhängig. Es entstehen auf diese Weise bewegliche Moiré-Muster in Abhängigkeit von der Bewegung des Vogels in der Nähe der Scheibe 20. Dadurch ist das Muster besonders auffällig. Auf diese Weise ist die Vogelschlagschutzwirkung verbessert.

Der Bedeckungsgrad der absorbierenden Musterbereiche eines Musters auf der Gesamtfläche der bemusterten Scheibe kann über 1 % der Fläche der Scheibe oder über 2 % oder über 5 % oder über 10 % oder über 20% liegen und/oder unter 50 % oder unter 20% oder unter 10 % oder unter 5 % oder unter 2 %.

Abermals wird darauf hingewiesen, dass die Beschreibung eben auf intensitätsabsorbierende Musterbereiche abstellte. Stattdessen oder zusätzlich können die Musterbereiche auch streuend und/oder reflektierend sein. Statt undurchsichtiger Bereiche können dann dunklere oder unschärfere oder spiegelnde Bereiche als Muster auftreten und die gleichen statischen und dynamischen Effekte hervorrufen.

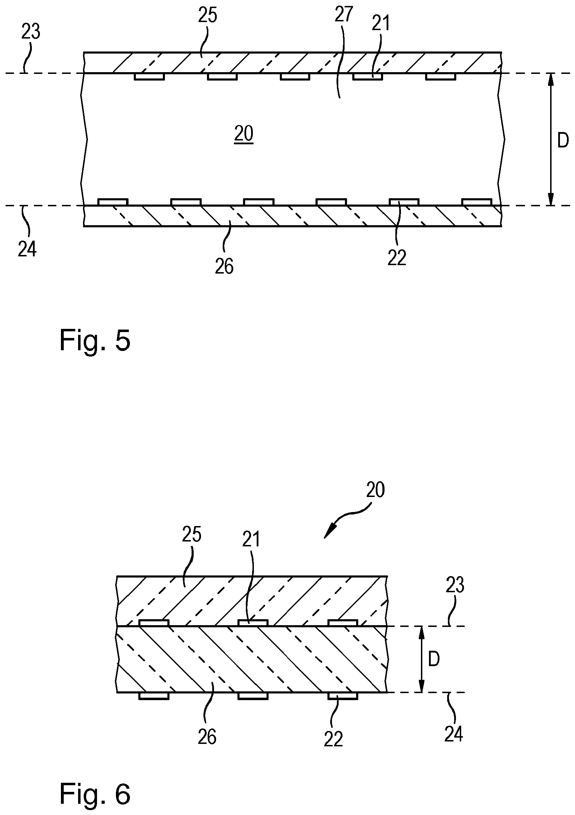

Fig. 5 zeigt eine Doppelscheibe, bei der zwei Einzelscheiben 25, 26 mit Abstand zueinander vorgesehen und auf diese Weise auch fest miteinander verbunden sind. Zusammen bilden sie wieder die transparente Scheibe 20. Die Einzelscheiben können einen konstanten Abstand voneinander haben. Sie können zwischen sich ein abgeschlossenes Volumen einschließen. Der Aufbau kann der thermischen Isolierung dienen (Isolarglas). Je eines der Muster 21, 22 kann auf je einer der Einzelscheiben 25, 26 liegen. Die beiden Musterebenen 23, 24 können beispielsweise die einander zugewandten Innenoberflächen der Einzelscheiben 25, 26 sein und dann jeweils wieder die einzelnen Muster 21, 22 tragen. Der Abstand D der Einzelmuster ist dann der Innenabstand der Einzelscheiben 25, 26, der, wie schon vorher gesagt, konstant oder womöglich auch variabel sein kann. Es ergeben sich dann qualitativ gleiche Effekte wie in Bezug auf Fig. 3 erläutert.

Fig. 6 zeigte eine Verbundglasscheibe, bei der zwei Einzelscheiben 25, 26 unmittelbar aneinander und aufeinander angebracht sind, also ohne den Zwischenraum 27 der Fig. 5. In Fig. 6 können die beiden Musterebenen 23, 24 die Oberflächen einer der Einzelscheiben sein; gezeigt sind die zwei Oberflächen der Einzelscheibe 26. Es können hier die Muster dann in geeigneter Weise angebracht sein. Es kann aber auch je ein Muster 21, 22 auf je einer Oberfläche einer Einzelscheibe 25, 26 liegen, wobei diese Oberflächen vorzugsweise nicht aneinander an liegen.

Die einzelnen Musterelemente 21a, 21b, ..., 22a, 22b ... des ersten Musters 21 und/oder des zweiten Musters 22 können Punkte und/oder Linien bzw. Striche aufweisen. Die Linien (1, 3 in Figur 1) können gegebenenfalls gerade Linien oder gekrümmte oder eckige Linien sein oder aufweisen, die offen oder geschlossen sein können. Punkte können kreisförmig oder oval sein (4, 2 in Figur 1) oder unregelmäßig (Flecken). Für die Punkte oder Linien kann eine Hauptabmessung H definiert werden, die der mittlere Punktdurchmesser (oder mittlerer Durchmesser flächengleicher Kreise) ist oder die mittlere Linienbreite. Die Hauptabmessung kann größer als 1 mm sein oder größer 2 mm oder größer 5 mm. Sie kann kleiner 50 mm oder kleiner 20 mm oder kleiner 10 mm sein.

Bei scharfer Abgrenzung der Musterelemente unterschiedlicher Qualität gegeneinander kann der Übergangsbereich zwischen ihnen kleiner 10% oder kleiner 5% oder kleiner 2% der Hauptabmessung eines (insbesondere des kleineren) der aneinander angrenzenden Elemente sein. Er kann aber auch größer als diese genannten Werte sein, aber kleiner als 30% oder kleiner als 20%.

Eines oder beide der Muster 21, 22 können mit einem aufgebrachten Material gebildet sein, wobei das Material ein Metall oder Metalloxid aufweisen kann, etwa ein oder mehrere Metallnitride und/oder Kombinationen der genannten Metalle bzw. Metallverbindungen, insbes. TiO₂, SnO₂, ZnOa, SiOa, Ag, NiCr, AlN, Si₃N₄. Das Material kann mit weiteren Materialien kombiniert/gemischt sein, etwa allgemein wirkender Sonnenschutzbeschichtungsmaterial, Wärmedämmmaterial.
das Muster kann aber auch durch Scheibenbehandlung (Gravur, Lasergravur, ätzen mit Säuren oder Laugen) gebildet werden.

Das Muster kann allgemein aufgedampft oder aufgesputtert oder aufgedruckt oder photolitographisch gefertigt oder aufgeklebt oder mit einer Kombination dieser Verfahren aufgebracht werden.

Denkbare Fertigungsverfahren sind:
a) Erzeugen der Musterelemente durch partielles Entfernen einer vorher vollflächig aufgebrachten Beschichtung z.B. durch Laserbearbeitung, Aufbringen einer Maskierung + anschließender Ätzvorgang.
b) Aufbringen einer Maskierung, danach Beschichten und Entfernung der Maskierung. Das Maskieren erfolgt z.B. über Siebdruckverfahren, Rollercoat-Verfahren, Digitaldruck, etc..
c) Bekleben einer oder mehrerer der Scheibenflächen mit entsprechend wirksamen Folien. Eine Folie kann das vollständige Muster tragen und vollflächig ausgebildet sein und so aufgeklebt werden. Denkbar ist aber auch, dass die Folie nur Bereiche einer Qualität (absorbierend und/oder reflektierend und/oder streuend) bildet und so nur partiell auf die Fläche aufgebracht wird.

Soweit sinnvoll und durch Herstellungsverfahren möglich, kann der Abstand unterschiedlicher Muster voneinander in Dickenrichtung der Scheibe auch dadurch erzeugt werden, dass Musterteile im Inneren der Scheibe gebildet werden und dann nicht auf einer Oberfläche der Scheibe liegen. Dies kann durch tiefenwirksame Bearbeitungsverfahren geschehen, etwa Ionenimplantation, Laserfokussierung oder ähnliches.

Das Scheibenmaterial kann allgemein vergleichsweise transparentes Material sein, insbesondere also Glas, Quarzglas, Fensterglas, KfZ-Verglasung, Schallschutzverglasung, Sicherheitsglas, Isolarglas, Verbundglas, Drahtglas, zwei-, drei- und mehrlagiges Glas. Das transparente Material kann auch gering absorbierender Kunststoff (insbes. thermoplastisch, duroplastisch) sein, etwa Acrylglas. Das Scheibenmaterial kann eben oder gebogen sein.

Zusätzlich zur Bearbeitung für den Vogelschlagschutz wie oben beschrieben kann die Scheibe Bearbeitungen für Wärmedämmung und/oder für Sonnenschutz aufweisen, etwa eine Beschichtung einer oder mehrerer Flächen, eine Befüllung eines abgeschlossenen Zwischenraums zwischen zwei Scheiben oder ähnliches. Insbesondere können die Scheibenbereiche der ersten Qualität schon höher absorbierend/reflektieren/ streuend sein als oben beschrieben, beispielsweise bis zu 10% oder bis zu 20 oder 30% der Intensität im sichtbaren Teil des Spektrums, und die Bereiche der zweiten Qualität sind demgegenüber noch einmal höher absorbierend/reflektieren/streuend, bspw. um mindestens 10% oder mindestens 20% der betrachteten Intensität höher.

## Patentansprüche

1. Transparente Scheibe mit einem ersten optisch wirksamen Muster (21) in einer ersten Ebene (23) und einem zweiten optisch wirksamen Muster (22) in einer von der ersten Ebene in Dickenrichtung der Scheibe beabstandeten zweiten Ebene (24),
**dadurch gekennzeichnet, dass**
die zwei Muster in den zwei beabstandeten Ebenen so gestaltet sind, dass sie Moiré-Effekte hervorrufen,
wobei die optisch wirksamen Muster regelmäßig und so gestaltet, beabstandet und ausgerichtet sind, dass in einem Abstand von 2 Metern oder 3 Metern oder 4 Metern von der Scheibe ein entstehendes Moirémuster eindimensional oder zweidimensional regelmäßig ist und in einer Dimension oder in zwei Dimensionen eine Gitterkonstante von über 2 cm und unter 30 cm aufweist,
wobei ein optisch wirksames Muster durch erste Scheibenbereiche gebildet wird, deren Transmissions- und/oder Absorptions- und/oder Reflexions-und/oder Streuungseigenschaften anders sind als diejenigen eines benachbarten zweiten Scheibenbereichs, und
ein erster Scheibenbereich an einer Wellenlänge in einem Wellenlängenbereich einen Absorptions- und/oder Reflexionsgrad von mindestens 30%, vorzugsweise mindestens 50% der Strahlungsleistung aufweist, wobei der Wellenlängenbereich zwischen 100 nm und 400 nm liegt.

2. Transparente Scheibe mit einem ersten optisch wirksamen Muster (21) in einer ersten Ebene (23) und einem zweiten optisch wirksamen Muster (22) in einer von der ersten Ebene in Dickenrichtung der Scheibe beabstandeten zweiten Ebene (24),
**dadurch gekennzeichnet, dass**
die zwei Muster so gestaltet sind, dass sie Moiré-Effekte hervorrufen,
wobei ein entstehendes Moirémuster eindimensional oder zweidimensional unregelmäßig ist und in einer Dimension betrachtet einen mittleren Abstand zwischen Maxima und benachbarten Minima hat, der über 2 cm und unter 20 cm liegt,
wobei ein optisch wirksames Muster durch erste Scheibenbereiche gebildet wird, deren Transmissions- und/oder Absorptions- und/oder Reflexions-und/oder Streuungseigenschaften anders sind als diejenigen eines benachbarten zweiten Scheibenbereichs, und
ein erster Scheibenbereich an einer Wellenlänge in einem Wellenlängenbereich einen Absorptions- und/oder Reflexionsgrad von mindestens 30%, vorzugsweise mindestens 50% der Strahlungsleistung aufweist, wobei der Wellenlängenbereich zwischen 100 nm und 400 nm liegt.

3. Scheibe nach Anspruch 1 oder 2, **dadurch gekennzeichnet, dass** mindestens eine der Ebenen auf einer Oberfläche der Scheibe liegt.

4. Scheibe nach einem der vorherigen Ansprüche, umfassend die Merkmale von entweder Anspruch 1 oder Anspruch 2, **dadurch gekennzeichnet dass** eine Ebene gekrümmt ist und zumindest bereichsweise im Inneren einer Scheibe verläuft.

5. Scheibe nach einem der vorherigen Ansprüche, umfassend die Merkmale von entweder Anspruch 1 oder Anspruch 2, **dadurch gekennzeichnet dass** die zwei Ebenen auf Oberflächen unterschiedlichen Teilscheiben der Scheibe liegen, wobei die Teilscheiben einen konstanten Abstand voneinander haben und zwischen sich ein abgeschlossenes Volumen einschließen oder unmittelbar aneinander anliegen.

6. Scheibe nach Anspruch 1, **dadurch gekennzeichnet, dass** die ersten Scheibenbereiche weniger als 60%, vorzugsweise zwischen 45% und 55% der Scheibenfläche einnehmen und wenigstens 10% oder wenigstens 20%.

7. Scheibe nach einem der vorherigen Ansprüche, umfassend die Merkmale von entweder Anspruch 1 oder Anspruch 2, **dadurch gekennzeichnet dass** eines oder beide der Muster mehrere unzusammenhängende erste Scheibenbereiche aufweisen, insbesondere Muster von Punkten und/oder geraden und/oder gebogenen Linien, die regelmäßig und/oder zufällig und/oder pseudo-zufällig gestaltet und angeordnet und verteilt sein können.

8. Scheibe nach einem der vorherigen Ansprüche, umfassend die Merkmale von entweder Anspruch 1 oder Anspruch 2, **dadurch gekennzeichnet dass** beide optisch wirksamen Muster regelmäßige Muster sind, die gegeneinander verdreht sein können.

9. Scheibe nach einem der vorherigen Ansprüche, umfassend die Merkmale von entweder Anspruch 1 oder Anspruch 2, **dadurch gekennzeichnet dass** die beiden Muster bereichsweise identisch zueinander und bereichsweise nicht identisch zueinander sind, wobei die identischen und nicht identischen Bereiche in einer Flächendimension der Muster oder in beiden Flächendimensionen periodisch angelegt sein können.

10. Scheibe nach einem der vorherigen Ansprüche, umfassend die Merkmale von entweder Anspruch 1 oder Anspruch 2, **dadurch gekennzeichnet dass** eines oder beide der Muster Gitter- oder Punktmuster sind oder aufweisen, die in einer oder in beiden Dimensionen der Ebene wenigstens bereichsweise unterschiedliche Gitterkonstanten aufweisen und/oder verdreht gegeneinander sind.

11. Scheibe nach einem der vorherigen Ansprüche, umfassend die Merkmale von entweder Anspruch 1 oder Anspruch 2, **dadurch gekennzeichnet dass** wenigstens eines der Muster mit einem aufgebrachten Material gebildet ist, wobei das Material ein Metall und/oder Metalloxid und/oder ein Nitrid aufweisen kann.

12. Scheibe nach einem der vorherigen Ansprüche, umfassend die Merkmale von entweder Anspruch 1 oder Anspruch 2, **dadurch gekennzeichnet dass** die Hauptabmessungen der einzelnen Musterteile zwischen 2 mm und 50 mm liegt, vorzugsweise zwischen 5 mm und 30 mm, wobei die Hauptabmessung der mittlere Punktdurchmesser eines flächengleichen Kreises oder die Breite einer Linie ist.

13. Scheibe nach einem der vorherigen Ansprüche, umfassend die Merkmale von entweder Anspruch 1 oder Anspruch 2, **dadurch gekennzeichnet dass** ein optisch wirksames Muster auf eine Scheibenfläche aufgedruckt ist.

14. Scheibe nach einem der vorherigen Ansprüche, umfassend die Merkmale von entweder Anspruch 1 oder Anspruch 2, **dadurch gekennzeichnet dass** die Scheibe eine Glasscheibe ist oder aufweist und eine Doppel-oder Dreifach- oder Mehrfachglasscheibe sein kann, die zwei oder drei oder mehr beabstandete Glasscheiben aufweisen kann.

## Claims

1. A transparent pane comprising a first optically effective pattern (21) in a first plane (23) and a second optically effective pattern (22) in a second plane (24) spaced apart from the first plane in a thickness direction of the pane, **characterized in that**
the two patterns are designed in the two spaced-apart planes such that they cause Moiré effects,
wherein the optically effective patterns are regular and are designed spaced apart and aligned such that, at a spacing of 2 meters or 3 meters or 4 meters from the pane, a Moiré pattern produced is one-dimensionally or two-dimensionally regular and has a lattice constant of above 2 cm and below 30 cm in one dimension or in two dimensions,
wherein an optically effective pattern is formed by first pane regions whose transmission properties and/or absorption properties and/or reflection properties and/or scattering properties are different from those of an adjacent second pane region, and
a first pane region has a degree of absorption and/or a degree of reflection of at least 30%, preferably of at least 50%, of the radiation power at a wavelength in a wavelength range, wherein the wavelength range is between 100 nm and 400 nm.

2. A transparent pane comprising a first optically effective pattern (21) in a first plane (23) and a second optically effective pattern (22) in a second plane (24) spaced apart from the first plane in a thickness direction of the pane, **characterized in that**
the two patterns are designed such that they cause Moiré effects,
wherein a Moiré pattern produced is one-dimensionally or two-dimensionally irregular and, viewed in one dimension, has a mean spacing between maxima and adjacent minima that lies above 2 cm and below 20 cm,
wherein an optically effective pattern is formed by first pane regions whose transmission properties and/or absorption properties and/or reflection properties and/or scattering properties are different from those of an adjacent second pane region, and
a first pane region has a degree of absorption and/or a degree of reflection of at least 30%, preferably of at least 50%, of the radiation power at a wavelength in a wavelength range, wherein the wavelength range is between 100 nm and 400 nm.

3. A pane in accordance with claim 1 or 2, **characterized in that** at least one of the planes is disposed on a surface of the pane.

4. A pane in accordance with any one of the preceding claims comprising the features of either claim 1 or claim 2, **characterized in that** a plane is curved and at least regionally extends in the interior of a pane.

5. A pane in accordance with any one of the preceding claims comprising the features of either claim 1 or claim 2, **characterized in that** the two planes are disposed on surfaces of different part panes of the pane, with the part panes having a constant spacing from one another and confining a closed volume between them or contacting one another directly.

6. A pane in accordance with claim 1, **characterized in that** the first pane regions take up less than 60%, preferably between 45% and 55%, of the pane surface and at least 10% or at least 20%.

7. A pane in accordance with any one of the preceding claims comprising the features of either claim 1 or claim 2, **characterized in that** one or both of the patterns has/have a plurality of non-contiguous first pane regions, in particular patterns of dots and/or of straight and/or curved lines which can be arranged and distributed in a regular manner and/or in a random manner and/or in a pseudorandom manner.

8. A pane in accordance with any one of the preceding claims comprising the features of either claim 1 or claim 2, **characterized in that** both optically effective patterns are regular patterns which can be rotationally shifted with respect to one another.

9. A pane in accordance with any one of the preceding claims comprising the features of either claim 1 or claim 2, **characterized in that** the two patterns are regionally identical to one another and are regionally not identical to one another, wherein the identical and non-identical regions can be periodically provided along one area dimension of the patterns or along both area dimensions.

10. A pane in accordance with any one of the preceding claims comprising the features of either claim 1 or claim 2, **characterized in that** one or both of the patterns are or comprise lattice patterns or dot patterns which at least regionally have different lattice constants in one dimension or in both dimensions of the plane and/or are rotated with respect to one another.

11. A pane in accordance with any one of the preceding claims comprising the features of either claim 1 or claim 2, **characterized in that** at least one of the patterns is formed by a deposited material, wherein the material can comprise a metal and/or a metal oxide and/or a nitride.

12. A pane in accordance with any one of the preceding claims comprising the features of either claim 1 or claim 2, **characterized in that** the main dimensions of the individual pattern parts are between 2 mm and 50 mm, preferably between 5 mm and 30 mm, wherein the main dimension is the mean dot diameter of a circle of the same area or is the width of a line.

13. A pane in accordance with any one of the preceding claims comprising the features of either claim 1 or claim 2, **characterized in that** an optically effective pattern is printed on a pane surface.

14. A pane in accordance with any one of the preceding claims comprising the features of either claim 1 or claim 2, **characterized in that** the pane is or comprises a glass pane and can be a double-glass pane or a triple-glass pane or a multi-glass pane which can have two or three or more spaced-apart glass panes.

## Revendications

1. Vitre transparente présentant un premier motif à effet optique (21) dans un premier plan (23) et un deuxième motif à effet optique (22) dans un deuxième plan (24) espacé du premier plan dans le sens de l'épaisseur de la vitre,
**caractérisée en ce que**
les deux motifs dans les deux plans espacés sont conçus de manière à provoquer des effets de moiré,
les motifs à effet optique étant réguliers et conçus, espacés et orientés de telle sorte qu'à une distance de 2 mètres ou de 3 mètres ou de 4 mètres de la vitre, un motif moiré résultant est régulier dans une dimension ou dans deux dimensions et présente une constante de réseau supérieure à 2 cm et inférieure à 30 cm dans une dimension ou dans deux dimensions,
un motif à effet optique étant formé par des premières zones de vitre dont les propriétés de transmission et/ou d'absorption et/ou de réflexion et/ou de diffusion sont différentes de celles d'une deuxième zone de vitre voisine, et une première zone de vitre présentant, à une longueur d'onde dans une plage de longueurs d'onde, un degré d'absorption et/ou de réflexion d'au moins 30 %, de préférence d'au moins 50 %, de la puissance de rayonnement, la plage de longueurs d'onde étant comprise entre 100 nm et 400 nm.

2. Vitre transparente présentant un premier motif à effet optique (21) dans un premier plan (23) et un deuxième motif à effet optique (22) dans un deuxième plan (24) espacé du premier plan dans le sens de l'épaisseur de la vitre,
**caractérisée en ce que**
les deux motifs sont conçus de manière à provoquer des effets de moiré,
un motif moiré résultant étant irrégulier dans une dimension ou dans deux dimensions et présentant, vu dans une dimension, une distance moyenne entre les maxima et les minima voisins qui est supérieure à 2 cm et inférieure à 20 cm,
un motif à effet optique étant formé par des premières zones de vitre dont les propriétés de transmission et/ou d'absorption et/ou de réflexion et/ou de diffusion sont différentes de celles d'une deuxième zone de vitre voisine, et une première zone de vitre présentant, à une longueur d'onde dans une plage de longueurs d'onde, un degré d'absorption et/ou de réflexion d'au moins 30 %, de préférence d'au moins 50 %, de la puissance de rayonnement, la plage de longueurs d'onde étant comprise entre 100 nm et 400 nm.

3. Vitre selon la revendication 1 ou 2,
**caractérisée en ce que** l'un au moins des plans est situé sur une surface de la vitre.

4. Vitre selon l'une des revendications précédentes, comprenant les éléments soit de la revendication 1, soit de la revendication 2,
**caractérisée en ce qu'**un plan est incurvé et s'étend au moins partiellement à l'intérieur d'une vitre.

5. Vitre selon l'une des revendications précédentes, comprenant les éléments soit de la revendication 1, soit de la revendication 2,
**caractérisée en ce que** les deux plans sont situés sur des surfaces de vitres partielles différentes de la vitre, les vitres partielles étant à une distance constante les unes des autres et enfermant entre elles un volume fermé, ou étant directement adjacentes les unes aux autres.

6. Vitre selon la revendication 1,
**caractérisée en ce que** les premières zones de vitre occupent moins de 60 %, de préférence entre 45 % et 55 %, de la surface de la vitre et au moins 10 % ou au moins 20 %.

7. Vitre selon l'une des revendications précédentes, comprenant les éléments soit de la revendication 1, soit de la revendication 2,
**caractérisée en ce que** l'un des motifs ou les deux motifs comprennent plusieurs premières zones de vitre non contiguës, en particulier des motifs de points et/ou de lignes droites et/ou de lignes courbes, qui peuvent être réguliers et/ou aléatoires et/ou pseudo-aléatoires dans leur conception, leur disposition et leur répartition.

8. Vitre selon l'une des revendications précédentes, comprenant les éléments soit de la revendication 1, soit de la revendication 2,
**caractérisée en ce que** les deux motifs à effet optique sont des motifs réguliers qui peuvent être tournés l'un par rapport à l'autre.

9. Vitre selon l'une des revendications précédentes, comprenant les éléments soit de la revendication 1, soit de la revendication 2,
**caractérisée en ce que** les deux motifs sont localement identiques l'un à l'autre et localement non identiques l'un à l'autre, les zones identiques et les zones non identiques pouvant être agencées de manière périodique dans une dimension ou dans les deux dimensions de la surface des motifs.

10. Vitre selon l'une des revendications précédentes, comprenant les éléments soit de la revendication 1, soit de la revendication 2,
**caractérisée en ce que** l'un des motifs ou les deux motifs sont ou présentent des motifs de réseau ou de points qui présentent des constantes de réseau au moins localement différentes dans l'une des dimensions du plan ou dans les deux dimensions du plan et/ou qui sont tournés l'un par rapport à l'autre.

11. Vitre selon l'une des revendications précédentes, comprenant les éléments soit de la revendication 1, soit de la revendication 2,
**caractérisée en ce que** l'un au moins des motifs est formé avec un matériau déposé, ledit matériau pouvant comprendre un métal et/ou un oxyde métallique et/ou un nitrure.

12. Vitre selon l'une des revendications précédentes, comprenant les éléments soit de la revendication 1, soit de la revendication 2,
**caractérisée en ce que** les dimensions principales des parties de motif individuelles sont comprises entre 2 mm et 50 mm, de préférence entre 5 mm et 30 mm, la dimension principale étant le diamètre moyen d'un cercle de même surface ou la largeur d'une ligne.

13. Vitre selon l'une des revendications précédentes, comprenant les éléments soit de la revendication 1, soit de la revendication 2,
**caractérisée en ce qu'**un motif à effet optique est imprimé sur une surface de la vitre.

14. Vitre selon l'une des revendications précédentes, comprenant les éléments soit de la revendication 1, soit de la revendication 2,
**caractérisée en ce que** la vitre est ou comprend une vitre de verre et peut être un double ou triple vitrage de verre ou un vitrage de verre multiple qui peut comprendre deux ou trois vitres de verre espacées ou plus.
